# EUROPÄISCHE PATENTSCHRIFT

(11) **EP 3 071 828 B1**
(45) Veröffentlichungstag und Bekanntmachung des Hinweises auf die Patenterteilung: **10.07.2019**
(21) Anmeldenummer: 15763588.9
(22) Anmeldetag: 15.09.2015
(51) Int. Cl.: F02M 55/00, F04B 53/16, F16L 41/02, F16L 41/08, F16L 13/02, F16L 13/04

(54) **ANORDNUNG, INSBESONDERE FÜR EIN KRAFTSTOFFFÖRDERSYSTEM, UND VERFAHREN ZU DEREN HERSTELLUNG**
ARRANGEMENT, IN PARTICULAR FOR A FUEL DELIVERY SYSTEM, AND METHOD FOR THE PRODUCTION THEREOF
AGENCEMENT, EN PARTICULIER POUR UN SYSTÈME D'ALIMENTATION EN CARBURANT, ET PROCÉDÉ DE FABRICATION DUDIT AGENCEMENT

(30) Priorität: 16.09.2014 DE 102014218512
(43) Veröffentlichungstag der Anmeldung: 28.09.2016
(73) Patentinhaber: CPT Group GmbH, 30165 Hannover (DE)
(72) Erfinder: ELLENBERG, Andreas, 99634 Gangloffsömmern (DE); HEINEMANN, Eyk, 93413 Cham (DE); REISINGER, Florian, 93426 Roding (DE)
(74) Vertreter: Waldmann, Georg Alexander
(86) Internationale Anmeldenummer: PCT/EP2015/071111
(87) Internationale Veröffentlichungsnummer: WO 2016/041973

(56) Entgegenhaltungen:
- EP-A1- 2 388 470
- DE-B3-102008 013 575
- DE-B3-102015 209 263
- JP-A- S59 187 183
- JP-U- S6 414 986
- US-A1- 2006 054 139

## Beschreibung

### Gebiet der Technik

Die vorliegende Erfindung betrifft eine Anordnung, vorzugsweise für ein Kraftstofffördersystem für ein Kraftfahrzeug, aufweisend ein Gehäuse und einen Hochdruckanschluss zur Fixierung an dem Gehäuse mittels eines Schweißprozesses, wobei das Gehäuse eine Wandung umfasst, die eine Anschlussöffnung aufweist, wobei der Hochdruckanschluss eine Wandung aufweist, die eine sich entlang einer Längsmittelachse in dem Hochdruckanschluss, vorzugsweise durch den Hochdruckanschluss hindurchführend, erstreckende Ausnehmung an ihrem Umfang berandet. Vorzugsweise kann es sich bei dem Gehäuse um ein Pumpengehäuse, bspw. einer Kraftstoffpumpe, handeln.

### Stand der Technik

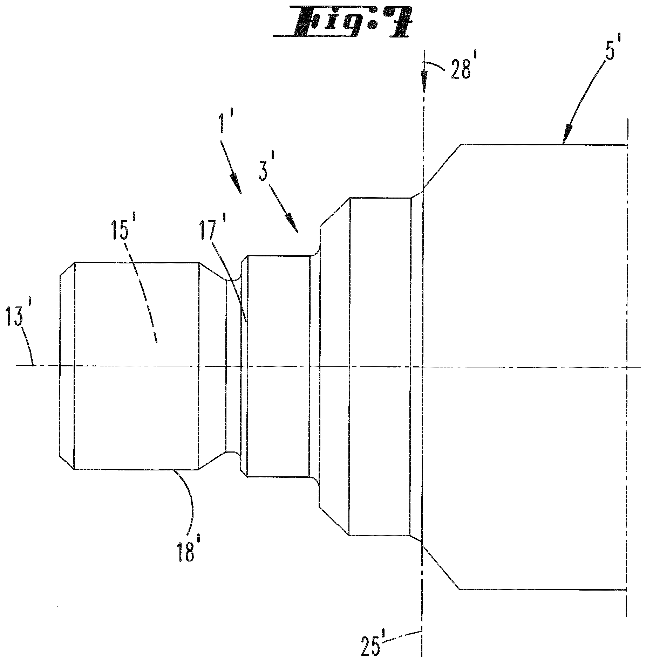

Eine derartige, im Stand der Technik bekannte Anordnung ist schematisch in Figur 7 gezeigt, wobei auch auf die dazu folgende Beschreibung Bezug genommen wird. Die Gehäusefrontebene bildet eine Trennfuge zwischen dem Hochdruckanschluss und dem Gehäuse, die von außen zur Herstellung einer Schweißverbindung frei zugänglich ist. Der durch Schweißung (Elektronenstrahl/Laserstrahl) fest mit dem Pumpengehäuse verbundene Hochdruckanschluss wird in und neben der Schweißnaht über die durch den auftretenden Pumpenhochdruck im Hochdruckanschluss generierten Kräfte bzw. Spannungen mechanisch hoch belastet. Dabei auftretende schwellende Zugspannungsspitzen können bei ungünstiger Konstruktion und Dimensionierung des Hochdruckanschlusses u. a. zu einem Versagen der dynamisch beanspruchten Schweißnaht (komplett oder in Teilen) führen. Da der Schweißnaht andererseits die Funktion einer Dichtung zukommt, kann dies in der Folge zum Austreten von Kraftstoff und damit verbundenen Sicherheitsproblemen führen und muss daher vermieden werden. Die Höhe der auftretenden mechanischen Beanspruchungen hängt unter anderem von der Höhe des beim Betrieb im hohlen Inneren auftretenden Überdruckes (im Vergleich zu dem außerhalb herrschenden Druck)ab und davon, wie groß im Inneren der Ausnehmung bzw. Durchgangsöffnung des Hochdruckanschlusses in einer axialen Projektionsbetrachtung die Oberflächen sind, auf die der Betriebsdruck einwirkt. Besonders dann, wenn im Inneren des Hochdruckanschlusses solche projizierten axialen Oberflächen, die dem Gehäuse zugewandt sind, größer als von dem Gehäuse abgewandte projizierte axiale Oberflächen sind, entstehen an der Verbindung zwischen dem Hochdruckanschluss und dem Gehäuse hohe Spannungen. Eine als optimal angenommene Konstruktion versucht daher durch Minimierung der projizierten axialen Fläche sowie eine beanspruchungsgerechte betriebsfeste Konstruktion die an der Schweißnaht angreifenden Lasten zu minimieren. Daher ist im Stand der Technik ein Hochdruckanschluss bekannt (vgl. Figur 7), bei dem mittels eines Strahlschweißverfahrens (bspw. Elektronenstrahl oder Laserstrahl) eine kreisförmige Schweißnaht mit einer zu der Mittelachse des Hochdruckanschlusses senkrechten bzw. radialen Strahlrichtung von außen in Richtung der Mittelachse, entlang der Berührlinie der beiden zu verbindenden Teile erzeugt wurde. Damit konnte die Eindringtiefe beim Schweißen maximiert werden, wodurch wiederum die axial resultierenden mechanischen Spannungen aus der Druckinnenbelastung (im Vergleich zu einer weniger tiefen Schweißnaht) vermindert werden konnten. In der Praxis ist jedoch die gemäß Figur 7 vorhandene gute äußere Zugänglichkeit der Kontaktzone je nach Anforderungen nicht immer gegeben. Insbesondere können Anforderungen betreffend den Zusammenbau der Gesamtpumpe (bspw. zur Erzielung höherer Drücke oder zur Minimierung von Kosten) eine Konstruktion nach sich ziehen, bei der die in Figur 7 gezeigte Strahlrichtung nicht mehr beibehalten werden kann, da nicht mehr alle Stellen am Umfang für den Schweißapparat erreichbar sind. Um weiterhin einen Schweißprozess und vorzugsweise ein Strahlschweißverfahren zur Anbringung des Hochdruckanschlusses verwenden zu können, wurde versucht, die Geometrie des Gehäuseanschlussbereiches zu verändern. Dabei müssen aber bestimmte geometrische Proportionen beachtet werden. Es besteht die Schwierigkeit, dass sich im Rahmen der möglichen konstruktiven Änderungen je nach Anforderung auch die projizierte axiale innere Oberfläche im Hochdruckanschluss vergrößert und somit auch die aus der Druckinnenbelastung erzeugte, insbesondere axiale, Kraft und die an der Schweißnaht auftretende Belastung.

EP 2 388 470 A1 beschreibt eine Anordnung aus einem Gehäuse und einem Hochdruckanschluss, wobei der Hochdruckanschluss einen Gehäuseanschlussbereich, einen Zwischenbereich und einen Anschlussbereich zum Anschließen von Leitungen aufweist, wobei zwischen dem Gehäuseanschlussbereich und dem Zwischenbereich ein radial ausgerichteter Übergangsbereich vorgesehen ist. Der Hochdruckanschluss ist mit einer ebenen Fläche an eine ebene Fläche des Gehäuses angeschweißt und weist in dem Gehäuseanschlussbereich innenseitig einen Radialeinstich und zwischen Zwischenbereich und Anschlussbereich außenseitig einen Axialeinstich auf.

In US 2006/0054139 A1 ist eine Verbindung zwischen einem Injektor und einem Rail eines Kraftstoffeinspritzsystem offenbart, wobei ein Vorsprung an einem Injektorgehäuse in eine Ausnehmung in einer Railwand eingreift.

### Zusammenfassung der Erfindung

Vor diesem Hintergrund liegt der Erfindung die Aufgabe zugrunde, eine Anordnung der eingangs genannten Art vorteilhaft weiterzubilden. Insbesondere wird angestrebt, dass dadurch die vorangehend beschriebenen Einschränkungen und Nachteile möglichst weitgehend vermieden werden.

Zur Lösung schlägt die Erfindung zur Weiterbildung der eingangs genannten Anordnung vor, dass der Hochdruckanschluss einen Gehäuseanschlussbereich, einen Zwischenbereich und einen zwischen dem Gehäuseanschlussbereich und dem Zwischenbereich angeordneten Übergangsbereich aufweist. Eine Haupterstreckungsrichtung des Übergangsbereichs ist zu einer Längsmittelachse des Hochdruckanschlusses senkrecht angeordnet. In zu der Längsmittelachse senkrechten Querschnittsebenen in dem Gehäuseanschlussbereich ist die Außenkontur, insbesondere der Außendurchmesser, des Hochdruckanschlusses größer als in dem Zwischenbereich, und in zu der Längsmittelachse senkrechten Querschnittsebenen in dem Gehäuseanschlussbereich ist die Innenkontur, insbesondere der Innendurchmesser, größer als in dem Zwischenbereich. Die Wandung des Gehäuses begrenzt an ihrer (auf das Gehäuse bezogenen) Außenseite eine Ausnehmung, die entlang einer Umfangsrichtung, vorzugsweise am Umfang geschlossen, um die Anschlussöffnung verläuft, und dass der Gehäuseanschlussbereich einen vorspringenden Bereich aufweist, der für die Herstellung der Schweißnaht zur Kontaktierung des Gehäuses bei teilweisem oder vollständigem Eintritt in die Ausnehmung geeignet ist. Die Erfindung schlägt weiterhin vor, dass in der Wandung in dem Gehäuseanschlussbereich angrenzend an den Übergangsbereich innenseitig ein Radialeinstich ausgebildet ist, und dass in der Wandung in dem Übergangsbereich angrenzend an den Zwischenbereich außenseitig ein Axialeinstich ausgebildet ist.

Die von der Erfindung im Bereich der Schweißverbindung vorgeschlagene Kombination eines vorspringenden Bereiches mit einer ihm an der ihm zugewandten Wandung des Verbindungspartners ausgebildeten Ausnehmung schafft vorteilhaft die Möglichkeit, den Kontaktbereich je nach Anforderungen so auszubilden, dass er für ein gewünschtes Schweißverfahren geeignet und auch zugänglich ist. Dies ermöglicht es, auch unter schwierigen konstruktiven Bedingungen weiterhin einen Schweißprozess zur Anbringung des Hochdruckanschlusses verwenden zu können. In Kombination damit schlägt die Erfindung vor, dass in der Wandung des Hochdruckanschlusses in einem ersten Bereich ein Axialeinstich (Einstich in axialer, also zu der Mittelachse paralleler Richtung) und in einem zweiten Bereich ein Radialeinstich (also ein Freistich in zu der Mittelachse senkrechter bzw. radialer Richtung) ausgebildet ist. Überraschend wurde von der Anmelderin gefunden, dass eine derartige Kombination von Freistichen geeignet ist, um die auf die Schweißverbindung zwischen dem Hochdruckanschluss und dem Gehäuse einwirkenden mechanischen Spannungen im Vergleich zu einer Anordnung, welche die Freistiche nicht aufweist, jedoch der beanspruchten Anordnung im Übrigen entspricht, deutlich zu verringern. Dies bedeutet, dass selbst dann, wenn durch eine gewünschte Gestaltung des Gehäuseanschlussbereiches (bspw. um die Zugänglichkeit der Schweißnaht zu verbessern) an sich eine bzgl. der Belastungen ungünstigere Situation entstehen würde, durch die der Kombination aus Radialeinstich und Axialeinstich eine vorteilhafte Wirkung entsteht, die zur Reduzierung der auf die Schweißzone einwirkenden mechanischen Spannungen führt, so dass auch dann eine zuverlässige Schweißverbindung ermöglicht wird. Die erfindungsgemäße Kombination aus Axialeinstich und Radialeinstich bewirkt, dass sich, wenn sich im Betrieb in dem Hochdruckanschluss ein vorgegebener Betriebsdruck aufbaut, von Beginn an eine Spannungsverteilung entwickelt, die im Vergleich zu einem herkömmlichen Hochdruckanschluss, der diese Freistiche nicht aufweist, einen geringeren Spannungsangriff an der Schweißnaht bedeutet. Im Vergleich zu einem herkömmlichen, diese Kombination von Freistichen nicht aufweisenden Hochdruckanschluss werden dafür die an die Freistiche angrenzenden Wandbereiche mit vergleichsweise höheren Spannungen belastet. Bei einem Vergleich eines herkömmlichen Hochdruckanschlusses mit einem erfindungsgemäßen Hochdruckanschluss bilden sich somit vergleichsweise unterschiedliche Spannungsverteilungen, was bedeutet, dass man in übertragenem Sinne davon sprechen könnte, dass ausgehend von einem herkömmlichen Hochdruckanschluss bei dem erfindungsgemäßen Hochdruckanschluss Spannungen von der Schweißnaht in andere, bei herkömmlichen Hochdruckanschlüssen weniger hoch belastete Zonen "verlagert" werden. Dadurch kann die dynamische Festigkeit der Schweißnaht gesichert und gleichzeitig eine höhere Flexibilität in der Konstruktion und Produktion/Montage der Gesamtpumpe erreicht werden. Die Erfindung ermöglicht somit eine sowohl hinsichtlich der Anschlussgeometrie und der Zugänglichkeit für ein Schweißverfahren wie auch hinsichtlich der an der Schweißfuge auftretenden mechanischen Beanspruchungen optimierte Geometrie. Hinzu kann, je nach Ausgestaltung, kommen, dass der Radialeinstich in Kombination mit dem Axialeinstich eine begrenzte Nachgiebigkeit in der Wandung erzeugt, so dass sich die Wandung beim Auftreten hoher Innendrücke in bzgl. Form und Ausmaß vorbestimmter Weise, also definiert, verformt, wobei je nach Ausgestaltung die Möglichkeit besteht, dass ein bestimmter Wandbereich des Hochdruckanschlusses in übertragenem Sinne wie eine Art Gelenk reagiert, so dass demzufolge an der Schweißnaht geringere Spannungen und an anderen, ansonsten nur schwach belasteten Bereichen vergleichsweise höhere Spannungen auftreten. Insofern kann die Kombination der beiden Freistiche bewirken, dass im Vergleich zu einer Bauform ohne die beiden Freistiche mechanische Spannungen von der Schweißnaht im übertragenen Wortsinn "weg geleitet" werden. Dadurch kann eine höhere Flexibilisierung des Montage- bzw. Schweißprozesses bei der Anbringung des Hochdruckanschlusses auch bei komplexeren Einbaubedingungen ermöglicht werden. Die Erfindung ermöglicht somit auch unter gestiegenen geometrischen und mechanischen Anforderungen eine kostengünstige Schweißverbindung. Die Erfindung kann nicht nur in Verbindung mit Gehäusen von Pumpen Verwendung finden. Vorstellbar wäre auch eine Anwendung in HD-Ventilgehäusen, beispielsweise bei Ventilen zur Nockenwellenverstellung, Servoventilen im Hochdruckbereich für Industrieanlagen, Baumaschinen usw. Wie nachfolgend beschrieben wird, ermöglicht die Erfindung auch eine optimierte Konstruktion, die einen Winkel zwischen der Mittelachse des Hochdruckanschlusses und der Schweiß-Einstrahlrichtung bzw. den Verbindungsflächen zulässt, der kleiner als 90° beträgt. Dies kann vorteilhaft sein, wenn Anbauten an das Gehäuse, wie beispielsweise ein Kragen an einem Pumpengehäuse zum Anschluss eines Aufspannflansches die Zugänglichkeit der Trennfuge für einen Schweißkopf unter einem Strahlwinkel von 90° zu der Mittelachse des Hochdruckanschlusses ansonsten verhindern würden. Die Erfindung ermöglicht somit einen spannungsoptimierten Hochdruckanschluss auch mit einer bspw. unter 45° verlaufenden Anschlussgeometrie. Durch die vergleichsweise reduzierte Belastung der Spannung an der Schweißnaht kann deren Lebensdauer erhöht und die Gefahr von Undichtigkeiten verringert werden.

Gemäß einem ersten Aspekt betrifft die Erfindung die genannte, ein Gehäuse und einen Hochdruckanschluss aufweisende Anordnung in noch nicht miteinander verschweißtem Zustand dieser Komponenten. Gemäß einem weiteren Aspekt betrifft die Erfindung auch eine ausgehend von einer solchen Anordnung mittels eines Schweißverfahrens hergestellte Kombination der Komponenten, bei der der Hochdruckanschluss fest an dem Gehäuse angebracht ist.

Bei der genannten Mittelachse handelt es sich um eine geometrische bzw. gedachte Gerade von unbegrenzter Länge, die in einer Längsrichtung zentral durch die Ausnehmung des Hochdruckanschlusses führt. Soweit in der nachfolgenden Beschreibung auf winkelmäßige Beziehungen eingegangen wird, wird teilweise von einer geometrischen Verlängerung der Mittelachse gesprochen. Stattdessen könnte aber auch unmittelbar mit der Mittelachse gesprochen werden, wenn man ihr eine unbegrenzte Länge zuordnet. Der Axialeinstich (allgemeiner könnte man auch von einem Einstich sprechen) und der Radialeinstich bilden jeweils einen Freistich, wobei dies aber hier bedeutungsmäßig nicht an die dem Begriff in technischen Regelwerken zugeordneten Abmessungen und Maßverhältnisse gebunden ist. Der Axialeinstich bildet eine Hinterschneidung in axialer, also in zu der Mittelachse paralleler, Richtung. Der Radialeinstich bildet eine Hinterschneidung in zu der Mittelachse senkrechter bzw. radialer Richtung. Anstelle von Radialeinstich könnte man auch von einer Hinterschneidung sprechen. Vorzugsweise kann sich der Radialeinstich in Bezug auf eine zu der Mittelachse parallele Richtung zwischen einer Innenseite des vorspringenden Bereiches und dem Übergangsbereich befinden. Vorzugsweise kann der vorspringende Bereich an dem Hochdruckanschluss an dem Gehäuseanschlussbereich ausgebildet sein und kann sich vorzugsweise entlang einer Umfangsrichtung um die Mittelachse, vorzugsweise am Umfang geschlossen, erstrecken. An den Zwischenbereich kann sich an dem von dem Gehäuseanschlussbereich abgewandten Längsende bspw. ein Anschlussbereich zum Anschließen einer Armatur, Leitung oder eines anderen Anschlusspartners anschließen.

Es bestehen zahlreiche weitere Möglichkeiten zur bevorzugten Weiterbildung:

Bevorzugt ist, dass der Hochdruckanschluss rotationssymmetrisch ausgebildet ist. Dies gilt für die Innenseite und für die Außenseite. Vorzugsweise kann der Hochdruckanschluss als Hülse oder als hülsenartiges Bauteil gestaltet sein.

Bei einem bevorzugten Ausführungsbeispiel ist vorgesehen, dass der Axialeinstich in durch die Mittelachse führenden Querschnittsebenen am Umfang eine Kontur aufweist, die eine von der Außenseite der im Zwischenraum liegenden Wandung ausgehende Rundung und eine an die Rundung anschließende Gerade, die zu der Außenseite der Wandung des Übergangsbereichs führt, aufweist. In der besagten Rundung ist die äußere Oberfläche der Wandung in Bezug auf die genannten Querschnittsebenen zweckmäßig konkav gewölbt. Vorzugsweise besitzt sie einen einheitlichen oder im Wesentlichen einheitlichen Krümmungsradius.

Es besteht die Möglichkeit, dass in einer axialen (also zu der Mittelachse parallelen) Projektionsbetrachtung der Radialeinstich radial außerhalb des Axialeinstiches liegt. Der Radialeinstich kann an den vorspringenden Bereich angrenzen. Es besteht die Möglichkeit, dass in zu der Mittelachse paralleler Richtung der Axialeinstich weiter als der Radialeinstich von der dem Hochdruckanschluss zugewandten Oberfläche der Wandung des Gehäuses beabstandet ist. In einem Ausführungsbeispiel ist vorgesehen, dass der Radialeinstich, wenn der vorspringende Bereich in die entlang der Umfangsrichtung verlaufende Ausnehmung eingesetzt ist, an die Oberfläche der Wandung angrenzt.

Es besteht die Möglichkeit, dass sich der vorspringende Bereich an der Außenseite in Richtung zu einem freien Längsende des vorspringenden Bereichs, insbesondere konisch, verjüngt, wobei insbesondere vorgesehen ist, dass die dortige äußere Oberfläche des vorspringenden Bereichs in durch die Mittelachse führenden Querschnittsebenen mit einer gedachten Verlängerung der Mittelachse einen Winkel einschließt, dessen Betrag im Bereich von 10 bis 80 Grad, insbesondere im Bereich von 30 bis 60 Grad, insbesondere im Bereich von 40 bis 50 Grad, liegt und insbesondere 45 Grad beträgt.

Die erfindungsgemäße Anordnung lässt sich durch bevorzugte Merkmale insbesondere im Hinblick auf eine besondere Eignung zur Verbindung von Gehäuse und Hochdruckanschluss mittels Strahlschweißverfahren (bspw. Elektronenstrahl oder Laserstrahl) vorteilhaft weiterbilden:

Es besteht zum Beispiel die Möglichkeit, dass die entlang der Umfangsrichtung verlaufende Ausnehmung in der Wandung als Nut ausgebildet ist und dass sich der von der Nut gebildete Ringraum an seiner Außenseite in Richtung zu dem Nutgrund, insbesondere konisch, verjüngt. In einem bevorzugten Ausführungsbeispiel ist vorgesehen, dass die die Außenseite der Nut berandende Oberfläche der Wandung des Gehäuses in durch die Mittelachse führenden Querschnittsebenen mit (einer Verlängerung) der Mittelachse einen Winkel einschließt, dessen Vorzeichen und Betrag dem Winkel entspricht, den die äußere Oberfläche des vorspringenden Bereiches mit (einer Verlängerung) der Mittelachse einschließt und dass sich diese beiden Oberflächen in dem gleichen Durchmesserintervall erstrecken.

Als zweckmäßig wird angesehen, dass eine von dem Gehäuse wegführende geometrische Verlängerung der konischen Kontaktzone zwischen der Außenseite des vorspringen Bereichs und der Außenseite der entlang der Umfangsrichtung verlaufenden Ausnehmung das Gehäuse geometrisch nicht schneidet. Dies begünstigt eine Rundum-Zugänglichkeit für eine Strahlschweißeinrichtung. Die beiden betreffenden Oberflächen können sich in einer parallel zu der Mittelachse geführten Projektionsbetrachtung ganz oder teilweise überlappen. Der äußere Rand ihrer Kontaktzonen gibt einen von außen sichtbaren Verlauf für die noch herzustellende Schweißnaht an. Es besteht die Möglichkeit, dass der vorspringende Bereich an seiner Innenseite einen zylindrische Oberfläche aufweist, dass die entlang der Umfangsrichtung verlaufende Ausnehmung in der Wandung als Nut ausgebildet ist und an ihrer Innenseite an eine zylindrische Oberfläche der Wandung grenzt, und dass diese beiden zylindrischen Oberflächen den gleichen oder einen etwa gleichen Durchmesser besitzen, was eine Zentrierung ermöglicht.

Es besteht die Möglichkeit, dass Konturen des vorspringenden Bereiches und der entlang der Umfangsrichtung verlaufenden Ausnehmung in der Wandung des Gehäuses in Bezug auf durch die Mittelachse führende Querschnittsebenen so aufeinander abgestimmt sind, dass der vorspringende Bereich vollständig oder teilweise in die entlang der Umfangsrichtung verlaufende Ausnehmung einsetzbar oder eingesetzt ist, so dass er mit seiner äußeren Oberfläche flächig an der äußeren Oberfläche der Wandung in der Ausnehmung und mit seiner inneren Oberfläche flächig an der inneren Oberfläche der Wandung in der Ausnehmung anliegt. Dies begünstigt die Erzielung einer Zentrierwirkung und eine stabile Abstützung.

Die Strahlrichtung kann vorzugsweise in Verlängerung der Fugenrichtung liegen. Dies ermöglicht vorteilhaft eine Maximierung der Eindringtiefe beim Schweißen, wodurch die im Schweißnahtquerschnitt wirksamen Spannungen vergleichsweise niedriger ausfallen als bei einem vergleichsweise kleineren Schweißnahtquerschnitt.

Bevorzugt ist, dass, wenn der vorspringende Bereich weitest möglich in die entlang der Umfangsrichtung verlaufende Ausnehmung eingesetzt ist, innerhalb der Ausnehmung zufolge der dazu aufeinander abgestimmten Querschnittsgeometrien des vorspringenden Bereichs und der Ausnehmung ein an das freie Längsende des vorspringenden Bereichs angrenzender Hohlraum verbleibt. Vorteilhaft können durch einen solchen, insbesondere entlang des Umfanges umlaufenden, Hohlraum Schweißspritzer in dem im Grund der Ausnehmung verlaufenden Hohlraum aufgefangen werden und gelangen dadurch nicht in das Innere des Hochdruckventils. Auch nachfolgende Komponenten, wie bspw. Injektoren, werden dadurch wirksam vor Verunreinigungen geschützt.

Mittels bestimmter bevorzugter Merkmale kann eine erfindungsgemäße Anordnung insbesondere für die Anwendung von Widerstandsschweißverfahren vorteilhaft weitergebildet werden:

Im Vergleich zu einer von radial außen erzeugten Schweißnaht ermöglicht dies, die Schweißnaht weiter radial innen anzubringen. Der im Betrieb der Anordnung in ihrem hohlen Inneren wirkende Überdruck kann nicht außerhalb der Schweißnaht auf den Hochdruckanschluss und auf das Gehäuse wirken, so dass sich mittels einer vergleichsweise weiter radial innen liegenden Schweißnaht vorteilhaft eine Verkleinerung der im Betrieb druckbeaufschlagten, an den inneren Hohlraum angrenzenden Oberflächen des Hochdruckanschlusses und des Gehäuses erreichen lässt. Dadurch kann auch die in einer axialen, also parallel zur Mittelachse geführten Betrachtung liegende projizierte druckbelastete Gesamtfläche verkleinert werden, was wiederum vergleichsweise zu einer Verringerung der auf die Schweißnaht wirkenden mechanischen Beanspruchung führt. Dies kann insbesondere für Betriebsbedingungen, in denen im Inneren der Anordnung besonders hohe Drücke auftreten, von Vorteil sein. Zur bevorzugten Weiterbildung einer erfindungsgemäßen Anordnung, insbesondere unter dem Gesichtspunkt einer Optimierung zum Kondensatorentladungsschweißen, ist unter anderem an folgende Möglichkeiten gedacht:

Bei einem bevorzugten Ausführungsbeispiel ist vorgesehen, dass sich der vorspringende Bereich an seiner Innenseite in Richtung zu einem freien Längsende des vorspringenden Bereichs, insbesondere konisch, erweitert, wobei seine dortige innere Oberfläche in durch die Mittelachse führenden Querschnittsebenen mit der Mittelachse einen Winkel einschließt, dessen Betrag im Bereich von 10 bis 40 Grad liegt und insbesondere 30 Grad beträgt. Es besteht die Möglichkeit, dass die entlang der Umfangsrichtung verlaufende Ausnehmung in der Wandung als Nut ausgebildet ist und an ihrer Innenseite an eine von der Nutmündung ausgehende Oberfläche der Wandung grenzt, die in durch die Mittelachse führenden Querschnittsebenen parallel zu der Mittelachse verläuft oder die den von der Nut gebildeten Ringraum in Richtung zu dem Nutgrund, insbesondere konisch, verjüngt, indem sie mit der Mittelachse einen Winkel einschließt, dessen Betrag kleiner als der Betrag des Winkels ist, den die innere Oberfläche an der konischen Erweiterung des vorspringenden Bereichs mit der Mittelachse einschließt. Bevorzugt ist vorgesehen, dass die Nutmündung innenseitig einen Durchmesser aufweist, der in einem Durchmesserintervall liegt, in dem sich die innere Oberfläche des vorspringenden Bereiches erstreckt.

Als zweckmäßig wird angesehen, dass der vorspringende Bereich teilweise in die entlang der Umfangsrichtung verlaufende Ausnehmung der Wandung eingesteckt ist, wobei seine innere Oberfläche gegen den radial inneren Rand der Nutmündung abgestützt ist, und dass die Formgebung der äußeren Oberflächen des vorspringenden Bereiches und der entlang der Umfangsrichtung verlaufenden Ausnehmung in der Wandung so aufeinander abgestimmt sind, dass sich diese Oberflächen während der genannten Abstützung nicht berühren, wobei insbesondere vorgesehen ist, dass diese Oberflächen in durch die Mittelachse führenden Querschnittsebenen mit der Mittelachse verschiedene Winkel einschließen. Dies ermöglicht bei Beginn des Schweißprozesses eine Freistellung zwischen den weiter radial außenliegenden Oberflächen des vorspringenden Bereiches und der Ausnehmung, so dass ein zunächst unerwünschter Strom-Nebenschluss vermieden wird. Zur Ausführung des Kondensatorentladungsschweißens besteht die Möglichkeit, dass das Gehäuse und der Hochdruckanschluss an Kondensatoren einer Kondensatorentladungsschweißanlage angeschlossen sind. Das Kondensatorentladungsschweißen ermöglicht auch unter gestiegenen geometrischen und mechanischen Anforderungen, eine kostengünstige Schweißverbindung zu realisieren und aufrecht zu erhalten. Für die Montage bspw. einer Gesamtpumpe ergibt sich durch die Erfindung außerdem eine zusätzliche Flexibilisierung, da nun nicht mehr eine Zugänglichkeit zur Schweißnaht von außen gegeben sein muss.

Vorstellbar wäre auch eine Anwendung in Hochdruck-Ventilgehäusen, beispielsweise Ventilen zur Nockenwellenverstellung, Servoventile im Hochdruckbereich für Industrieanlagen, Baumaschinen etc. Generell kommen sämtliche über Kondensatorentladungsschweißen herstellbare Hochdruckabgänge in Frage. Das Kondensatorentladungsschweißen setzt leitfähige und schweißbare Materialien voraus.

Als Verallgemeinerung des Erfindungsgedankens besteht die Möglichkeit, eine umlaufende Kante an dem Gehäuse oder an dem Hochdruckanschluss vorzusehen und an dieser Kante den Kontaktdruck für den Kondensatorentladungs-Schweißprozess zu erzeugen. Ein vorteilhaftes Verfahren zur Herstellung einer Anordnung für ein Kraftstofffördersystem weist zumindest folgende Verfahrensschritte auf:
Bereitstellen einer Anordnung, welche einzelne oder mehrere der dazu vorangehend beschriebenen Merkmale aufweist, Anordnen des Gehäuses und des Hochdruckanschlusses, so dass der vorspringende Bereich ganz oder teilweise in die entlang der Umfangsrichtung verlaufende Ausnehmung der Wandung eintritt und die Wandung, in der sich die Ausnehmung entlang der Umfangsrichtung erstreckt, kontaktiert, stoffschlüssiges Verbinden des vorspringenden Bereichs und der Wandung, in der sich die Ausnehmung entlang der Umfangsrichtung erstreckt, mittels eines Schweißverfahrens unter Ausbildung von zumindest einer Schweißnaht, wobei ein fixierter Zustand zwischen dem Hochdruckanschluss und dem Gehäuse hergestellt wird.

Es bestehen zahlreiche Möglichkeiten zur bevorzugten Weiterbildung des Verfahrens:
Bevorzugt ist, dass das stoffschlüssige Verbinden mittels Strahlschweißen, insbesondere mittels Elektronen - strahlschweißen oder mittels Laserstrahlschweißen, ausgeführt wird und dass der Schweißstrahl in Bezug auf durch die Mittelachse führende Querschnittsebenen von außen in, insbesondere geradliniger, Verlängerung auf eine Anlagefuge zwischen dem Hochdruckanschluss und der Wandung, in der sich die Ausnehmung entlang der Umfangrichtung erstreckt, gerichtet wird. Alternativ besteht die Möglichkeit, dass eine Kondensatorentladungsschweißanlage bereitgestellt und an den Hochdruckanschluss und an das Gehäuse angeschlossen wird und dass das stoffschlüssige Verbinden mittels Kondensatorentladungsschweißen, ausgehend von der Kontaktzone zwischen der Nutmündung in der Wandung und der inneren Oberfläche des vorspringenden Bereichs, ausgeführt wird.

Ein Gehäuse mit einem daran angeschweißtem Hochdruckanschluss ist mittels einer erfindungsgemäßen Anordnung und/oder mittels des oben beschriebenen Verfahrens hergestellt.

Eine Anordnung für ein Kraftstofffördersystem für ein Kraftfahrzeug weist einen Hochdruckanschluss und ein Gehäuse auf, wobei der Hochdruckanschluss einen vorspringenden Bereich und das Gehäuse eine Wandung aufweist, die eine Ausnehmung begrenzt, der vorspringende Bereich und die Wandung mittels eines Schweißprozesses unter Ausbildung einer Schweißnaht miteinander fixierbar sind, und der Hochdruckanschluss einen ersten Bereich und einen zweiten Bereich aufweist, die jeweils eine vorgegebene geometrische Form aufweisen, so dass in einem fixierten Zustand des Hochdruckanschlusses und des Gehäuses in einem Betrieb des Kraftstofffördersystems durch auftretenden Hochdruck generierte Kräfte innerhalb des Hochdruckanschlusses weg von der Schweißnaht verlagert werden.

Es besteht die Möglichkeit, dass der Hochdruckanschluss eine Mittelachse aufweist, bezüglich derer der vorspringende Bereich und die Wandung jeweils eine schräge Flanke aufweisen, und die jeweilige schräge Flanke des vorspringenden Bereichs und der Wandung mittels des Schweißprozesses unter Ausbildung der Schweißnaht miteinander fixierbar sind. Es besteht die Möglichkeit, dass der Hochdruckanschluss entlang der Mittelachse eine Wandung aufweist, die eine durchdringende Ausnehmung umgibt, und der erste Bereich an einer Außenseite und der zweite Bereich an einer Innenseite der Wandung ausgebildet sind. In einem Ausführungsbeispiel ist vorgesehen, dass in dem fixierten Zustand des Hochdruckanschlusses und des Gehäuses eine Trennebene im Wesentlichen durch eine Kontur des Gehäuses senkrecht zur Mittelachse des Hochdruckanschlusses bestimmt ist, der erste Bereich des Hochdruckanschlusses bezogen auf die Mittelachse axial weiter von der Trennebene entfernt ausgebildet ist als der zweite Bereich, und der zweite Bereich im Wesentlichen an dem vorspringenden Bereich oder der Wandung des Hochdruckanschlusses anschließt, wobei der zweite Bereich bezogen auf die Mittelachse im Wesentlichen axial weiter von der Trennebene entfernt ausgebildet ist als der vorspringende Bereich oder die Wandung. Es besteht die Möglichkeit, dass der erste Bereich und der zweite Bereich des Hochdruckanschlusses im Wesentlichen sphärisch ausgebildet sind. Bevorzugt ist, dass die jeweilige schräge Flanke bezogen auf einen Querschnitt bezüglich der Mittelachse im Wesentlichen planar ausgebildet ist. Als zweckmäßig wird angesehen, dass die jeweilige planar ausgebildete schräge Flanke einen spitzen Winkel im Bereich von 30° bis 60° zur Mittelachse des Hochdruckanschlusses aufweist. Es besteht die Möglichkeit, dass die Wandung einen inneren Bereich und einen äußeren Bereich aufweist, und mittels eines Schweißprozesses die Schweißnaht zwischen dem vorspringenden Bereich und dem inneren Bereich der Wandung ausbildbar ist.

Ein Verfahren zur Herstellung einer Anordnung für ein Kraftstofffördersystem, umfasst die Schritte Bereitstellen eines Hochdruckanschlusses, der eine Mittelachse, einen ersten Bereich und einen zweiten Bereich mit vorgegebener geometrischer Form aufweist, Bereitstellen eines Gehäuses, wobei eines aus Hochdruckanschluss und Gehäuse einen vorspringenden Bereich aufweist und das andere eine Wandung aufweist, die eine Ausnehmung begrenzt, Anordnen des vorspringenden Bereichs in der Ausnehmung, wobei der vorspringende Bereich die Wandung zumindest teilweise kontaktiert, und stoffschlüssiges Verbinden des vorspringenden Bereichs und der Wandung unter Ausbilden einer Schweißnaht, bei dem ein fixierter Zustand zwischen dem Hochdruckanschluss und dem Gehäuse hergestellt wird.

Das Verfahren kann vorzugsweise umfassen: Anordnen des vorspringenden Bereichs in der Ausnehmung, wobei der vorspringende Bereich und die Wandung jeweils eine schräge Flanke aufweisen, und stoffschlüssiges Verbinden der schrägen Flanken unter Ausbilden einer Schweißnaht, bei dem ein fixierter Zustand zwischen dem Hochdruckanschluss und dem Gehäuse hergestellt wird. Es besteht die Möglichkeit, dass das Verfahren stoffschlüssiges Verbinden in Abhängigkeit einer geometrischen Form des vorspringenden Bereichs und der Wandung und/oder der schrägen Flanken umfasst. Bei einem Ausführungsbeispiel umfasst das Verfahren stoffschlüssiges Verbinden in Abhängigkeit eines Winkels der schrägen Flanken bezogen auf die Mittelachse des Hochdruckanschlusses. Es besteht die Möglichkeit, dass das Verfahren stoffschlüssiges Verbinden der jeweiligen schrägen Flanken unter einem Winkel von 30° bis 60° bezogen auf die Mittelachse des Hochdruckanschlusses umfasst. Es besteht die Möglichkeit, dass der Schweißprozess ein Kondensatorenentladungsschweißen umfasst. Bevorzugt ist, dass die Wandung einen inneren Bereich und einen äußeren Bereich aufweist, und im Rahmen des stoffschlüssigen Verbindens die Schweißnaht zwischen dem vorspringenden Bereich und dem inneren Bereich der Wandung ausgebildet wird.

### Kurze Beschreibung der Zeichnungen

Die Erfindung und eine aus dem Stand der Technik bekannte Anordnung wird nachfolgend anhand der beigefügten Figuren beschrieben, wobei die Figuren 1 bis 6 bevorzugte Ausführungsbeispiele der Erfindung und Figur 7 eine aus dem Stand der Technik bekannte Anordnung zeigen. Im Einzelnen zeigt:
- Fig. 1: perspektivisch eine erfindungsgemäße Anordnung;
- Fig. 2: einen Teilschnitt durch die in Figur 1 gezeigte Anordnung entlang Schnittebene II - II;
- Fig. 3: eine Vergrößerung von Detail III aus Figur 2;
- Fig. 3a: eine zu Figur 3 vergleichbare Darstellung, in welcher die Höhe der Spannungen schematisch mittels verschiedener Schraffuren angedeutet ist;
- Fig. 4: in einer Schnittansicht nur den in den Figuren 1 bis 3 gezeigten Hochdruckanschluss;
- Fig. 5: in einer bzgl. der Schnittebene zu Figur 2 vergleichbaren Ansicht eine erfindungsgemäße Anordnung gemäß einem zweiten bevorzugten Ausführungsbeispiel;
- Fig. 6: eine Vergrößerung von Ausschnitt VI aus Figur 5, jedoch zeigend eine von Figur 5 etwas abgewandelte Geometrie gemäß einem weiteren bevorzugten Ausführungsbeispiel, und
- Fig. 7: schematisch anhand der äußeren Konturen eine aus dem Stand der Technik bekannte Anordnung.

### Beschreibung der Ausführungsformen

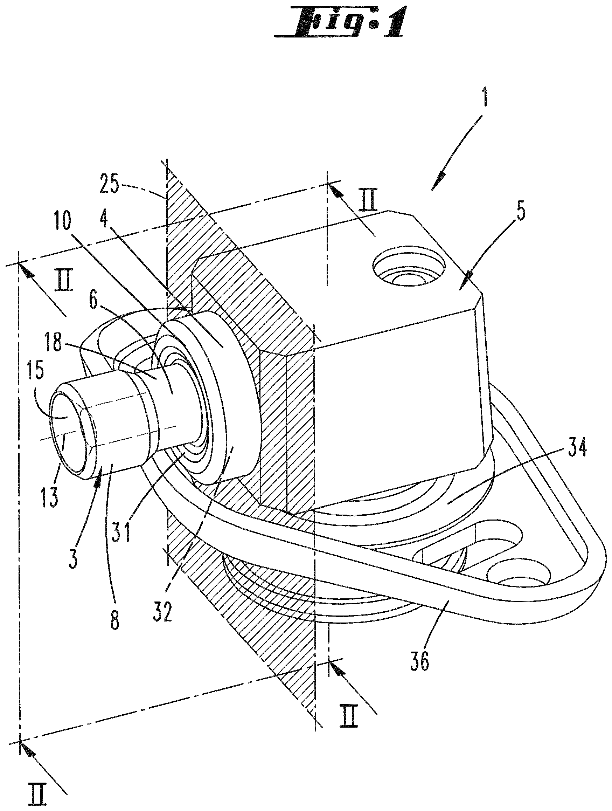

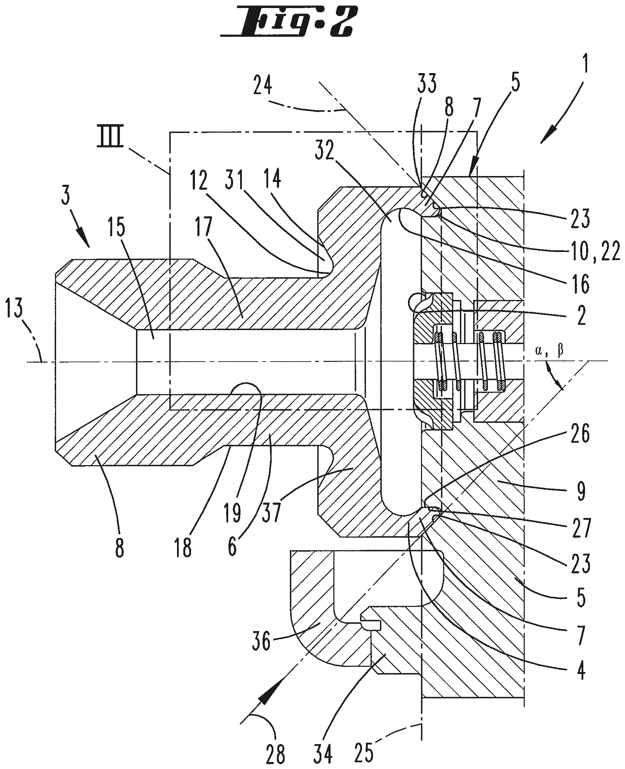

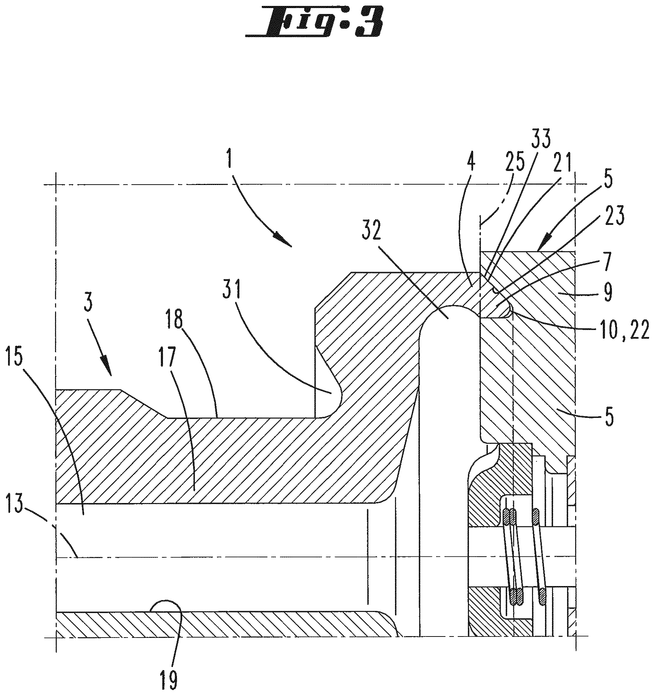

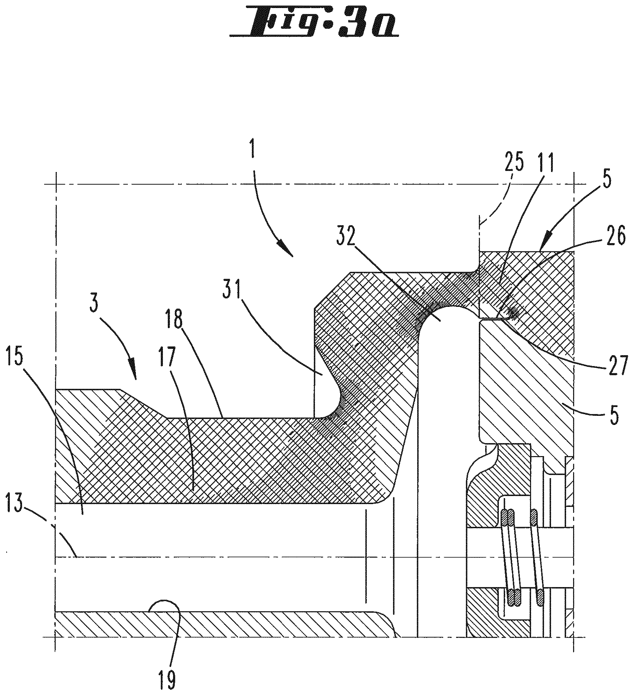

Mit Bezug auf die Figuren 1 bis 4 wird ein erstes Ausführungsbeispiel einer erfindungsgemäßen Anordnung 1 vorgestellt. Es handelt sich um eine Anordnung 1 für ein Kraftstofffördersystem eines Kraftfahrzeuges. Die Anordnung 1 umfasst ein Gehäuse 5 und einen Hochdruckanschluss 3. In den Figuren 1 bis 4 (abgesehen von Figur 3a) sind diese beiden Komponenten in einer zueinander passenden Lage, jedoch vor der Herstellung einer sie miteinander verbindenden Schweißverbindung gezeigt. Diese Lage kann bspw. mit einem Fachmann bekannten Hilfsmitteln zur Fixierung erreicht werden. Das Gehäuse 5 besitzt eine Wandung 9, die eine Anschlussöffnung 2 aufweist. Der Hochdruckanschluss 3 besitzt eine Wandung 17, die eine sich durch den Hochdruckanschluss 3 durchgehend erstreckende Ausnehmung 15 an ihrem bzgl. einer Mittelachse 13 gebildeten Umfang berandet. Er ist als Hülse mit entlang der Länge (entlang der Mittelachse) innen und außen variierenden Durchmessern ausgestaltet. Der Hochdruckanschluss umfasst einen dem Gehäuse 5 zugewandten Gehäuseanschlussbereich 4, einen Zwischenbereich 6 und einen Anschlussbereich 8, der zum Anschluss an gewünschte Armaturen, Leitungen oder an andere Anschlusspartner dienen kann und der bspw. an seiner Außenseite ein (in den Figuren nicht mit dargestelltes) Gewinde tragen kann. Zwischen dem Gehäuseanschlussbereich 4 und dem Zwischenbereich 6 erstreckt sich ein Übergangsbereich 37. Dessen Haupterstreckungsrichtung in durch die Mittelachse führenden Querschnittsebenen ist radial, also senkrecht zu der Mittelachse 13. Wie Figur 2 zeigt, handelt es sich im Wesentlichen um einen ringscheibenförmig umlaufenden Abschnitt der Wandung 17. In dem Beispiel ist der Hochdruckanschluss 3 an seiner Außenseite 18 und an seiner Innenseite 19 rotationssymmetrisch ausgebildet. Der Außendurchmesser des Hochdruckanschlusses 3 ist in dem Gehäuseanschlussbereich 4 größer als in dem Zwischenbereich 6. Auch der Innendurchmesser des Hochdruckanschlusses (also der Außendurchmesser seiner zentralen Ausnehmung 15) ist in dem Gehäuseanschlussbereich 4 größer als in dem Zwischenbereich 6. In dem Beispiel begrenzt die Wandung 9 des Gehäuses an ihrer auf das Gehäuse bezogenen Außenseite eine Ausnehmung 10, die sich entlang einer Umfangsrichtung am Umfang geschlossen um die Anschlussöffnung 2 herum erstreckt. Der Gehäuseanschlussbereich 4 umfasst einen vorspringenden Bereich 7, an dem sich sein axiales Längsende befindet. Wie bspw. Figur 2 verdeutlicht, ist der vorspringende Bereich 7 geometrisch auf die umlaufende Ausnehmung 10 abgestimmt, so dass er für die Herstellung einer Schweißnaht zur Kontaktierung des Gehäuses 5 bei gleichzeitig teilweisem oder vollständigem Eintritt in die Ausnehmung geeignet ist. In dem Gehäuseanschlussbereich 4 ist in der Wandung 17 angrenzend an den Übergangsbereich 37 innenseitig ein Radialeinstich 32 ausgebildet. Zusätzlich ist in dem Übergangsbereich 37 in der Wandung 17 des Hochdruckanschlusses 3 angrenzend an den Zwischenbereich 6 außenseitig ein Axialeinstich 31, der eine Hinterschneidung bildet, ausgebildet.

In durch die Mittelachse 13 führenden Querschnittsebenen (d.h. in parallel durch die Mittelachse 13 führende Querschnittsebenen, wie bspw. in der in den Figuren gewählten Schnittebene) besitzt der Axialeinstich 31 am Umfang bzw. an einer jeweiligen Position des Umfanges eine Kontur, die ausgehend von der im Beispiel zylindrischen Außenseite 18 der Wandung 17 des Zwischenbereichs 6 (mit dem Bezugszeichen 18 ist allgemein die Außenseite der Wandung 17 und mit dem Bezugszeichen 19 allgemein die Innenseite der Wandung 17 bezeichnet) ein Rundung 12 und eine an die Rundung 12 anschließende Gerade 14 umfasst, wobei die Gerade 14 zu einer zu der Mittelachse 13 senkrechten Außenseite 18 der Wandung 17 des Übergangsbereichs 37 führt. In der Rundung 12 ist die äußere Oberfläche der Wandung 17 in Bezug auf die genannten Querschnittsebenen konkav gewölbt.

Der Radialeinstich 32 weist in durch die Mittelachse 13 führenden Querschnittsebenen am Umfang, d. h. an einer jeweiligen Position des Umfanges, eine innerhalb der Querschnittsebenen durchgehend gerundete Kontur 16 auf. Zufolge dieser gerundeten Kontur 16 ist die innere Oberfläche der Wandung 17 dort in Bezug auf zu der Mittelachse 13 senkrechte Querschnittsebenen konkav gewölbt. In dem Beispiel, d. h nicht notwendig, ist innerhalb der Kontur 16 ein einheitlicher Krümmungsradius gewählt.

Wie zum Beispiel Figur 2 verdeutlicht, liegt in dem gewählten Ausführungsbeispiel in einer axialen Projektionsbetrachtung, d. h. in einer zu der Mittelachse 13 parallelen Projektionsbetrachtung, der Radialeinstich 32 radial außerhalb des Axialeinstichs 31. Der Radialeinstich 32 grenzt an den vorspringenden Bereich 7 an. In einer zu der Mittelachse 13 parallelen Richtung ist der Axialeinstich 31 weiter als der Radialeinstich 32 von der dem Hochdruckanschluss 3 zugewandten Oberfläche bzw. von der Gehäusefrontebene 25 des Gehäuses 5 beabstandet. Wie schon angesprochen, sind der Hochdruckanschluss 3 und das Gehäuse 5 in einer Relativlage zueinander dargestellt, in welcher die beiden Komponenten mittels eines Schweißverfahrens miteinander verbunden werden sollen. Bei dem in Figur 2 gezeigten Ausführungsbeispiel ist vorgesehen, dass der vorspringende Bereich 7, wenn der vorspringende Bereich 7 weitest möglich in die entlang der Umfangsrichtung verlaufende Ausnehmung 10 eingesetzt ist, entlang des Umfanges jeweils flächig an zwei zueinander geneigte Oberflächen der Wandung 9 angrenzt.

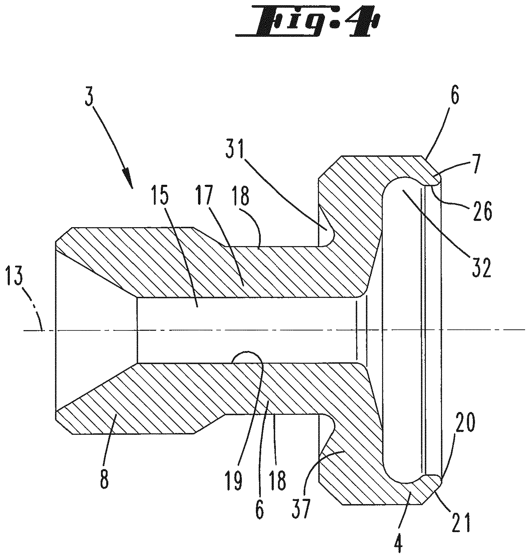

Der vorspringende Bereich 7 verjüngt sich an seiner Außenseite 18 in Richtung zu seinem freien Längsende 20 konisch. Die dortige äußere Oberfläche 21 schließt in durch die Mittelachse 13 führenden Querschnittsebenen (vgl. die Figuren 2 und 4) mit der Mittelachse 13 bzw. mit ihrer geometrischen (gedachten) Verlängerung einen Winkel α ein, dessen Betrag in dem Beispiel 45° beträgt.

Die entlang der Umfangsrichtung um die Mittelachse 13 verlaufende Ausnehmung 10 in der Wandung 9 des Gehäuses 5 ist als Nut 22 ausgebildet. Der von der Nut 22 ausgebildete Ringraum verjüngt sich an seiner Außenseite (also an der radial weiter außenliegenden Seite seiner beiden Seiten) in Richtung zu dem Nutgrund konisch. In dem in den Figuren 1 bis 4 gezeigten Ausführungsbeispiel schließt die die Außenseite der Nut 22 berandende Oberfläche 23 der Wandung 9 des Gehäuses in den durch die in Längsrichtung verlaufende Mittelachse 13 führenden Querschnittsebenen mit einer geometrischen Verlängerung der Mittelachse 13 einen Winkel β ein, dessen Vorzeichen und Betrag dem Winkel α entspricht. Beide Oberflächen 21, 23 erstrecken sich in einer axialen Projektionsbetrachtung überlappend in einem gemeinsamen Durchmesserintervall. Figur 2 veranschaulicht, dass eine von dem Gehäuse 5 wegführende gerade geometrische Verlängerung 24 der konischen Kontaktzone zwischen den Oberflächen 21, 23 das Gehäuse 5 geometrisch nicht schneidet. Bei dem in den Figuren 1 bis 4 gezeigten Ausführungsbeispiel weist der vorspringende Bereich 7 an seiner Innenseite eine zylindrische Oberfläche 26 auf. Die als Nut 22 ausgebildete umlaufende Ausnehmung 10 grenzt an eine ebenfalls zylindrische Oberfläche 27 der Wandung 9 an, wobei die beiden zylindrischen Oberflächen 26, 27 zur Erzielung einer Zentrierung gleichen Durchmesser besitzen. Die Konturen des vorspringenden Bereiches 7 und der entlang der Umfangsrichtung verlaufenden Ausnehmung 10 sind in Bezug auf durch die Mittelachse 13 führende Querschnittsebenen so geometrisch aufeinander abgestimmt, dass der vorspringende Bereich vollständig in die entlang der Umfangsrichtung verlaufende Ausnehmung 10 einsetzbar ist (wie bspw. in Figur 2 gezeigt wird). Bei dieser Position grenzt der vorspringende Bereich 7 mit seiner äußeren Oberfläche 21 flächig an die äußere Oberfläche 23 der Wandung 9 innerhalb der Ausnehmung 10 an und mit seiner inneren Oberfläche 26 flächig an die innere Oberfläche 27 der Wandung 9 in der Ausnehmung 10 an.

In der perspektivischen Ansicht von Figur 1 ist gezeigt, dass das Gehäuse 5 aufgrund bestehender Anforderungen einen Gehäusekragen 34 aufweist, der für bestimmte Anwendungen mit einem Aufspannflansch 36 auf in den Figuren nicht näher dargestellte Weise verbunden werden kann. Zu einem Zeitpunkt, zu dem der Hochdruckanschluss 3 mittels eines Schweißverfahrens an dem Gehäuse 5 fixiert werden soll, ist der Aufspannflansch 36 nicht an dem Gehäusekragen 34 angebracht. Figur 2 veranschaulicht dazu, dass dann, wenn der Aufspannflansch 36 nicht vorhanden ist, die von der Oberflächen 21, 23 gebildete Kontaktzone von außen in ihrer geradlinigen Verlängerung, also auch in Richtung des exemplarisch gezeigten Pfeiles 28, mit einem Schweißkopf eines Strahlschweißgerätes zugänglich ist. Somit kann eine Schweißnaht 11 (deren Position in Figur 3 schematisch gezeigt ist) mittels eines Strahlschweißverfahrens von außen entlang des gesamten Umfanges bei zu der Kontaktzone fluchtender und mit der Mittelachse 13 einen Winkel von 45 Grad einschließender Strahlrichtung erzeugt werden.

Figur 3a zeigt den auch in Figur 3 für die Detailvergrößerung gewählten Ausschnitt. Abweichend von Figur 3 ist in Figur 3a im Bereich der Wandung 17 und der Wandung 9 schematisch eine jeweils innerhalb dieser Wandungen variierende Schraffur gewählt. Dabei bedeutet eine vergleichsweise enge Schraffur, dass sich in dem betreffenden Bereich während des Betriebs der Anordnung 1, wenn in der Ausnehmung 15 betriebsbedingt ein höherer Druck als außerhalb des Hochdruckanschlusses 3 herrscht, vergleichsweise höhere mechanische Spannungen resultieren als in solchen Bereichen, in denen die Schraffurlinien vergleichsweise weiter voneinander beabstandet sind. Diese Zusammenhänge wurden durch Berechnungen nachgewiesen. Es wird hieraus deutlich, dass in den an den Axialeinstich 31 und an den Radialein-stich 32 angrenzenden Wandbereichen höhere mechanische Spannungen als im Bereich der Schweißnaht 11 wirken. Die im Bereich der Schweißnaht 11 wirksamen mechanischen Spannungen sind geringer als die mechanischen Spannungen, die dort bei gleicher betrieblicher Belastung bei Annahme eines Hochdruckanschlusses 3 wirken würden, der den Axialeinstich 31 und den Radialeinstich 32 nicht aufweist, ansonsten aber dem in den Figuren 1 bis 4 gezeigten Hochdruckanschluss 3 entspricht.

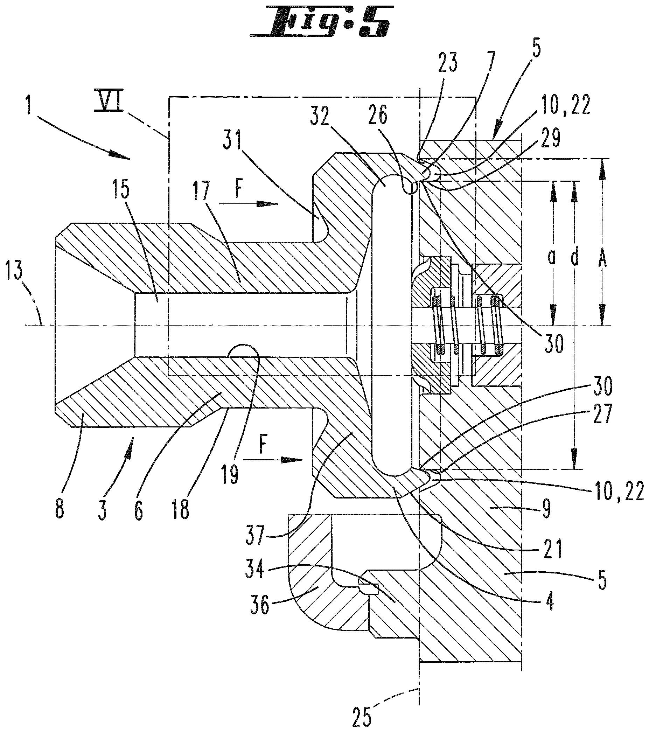

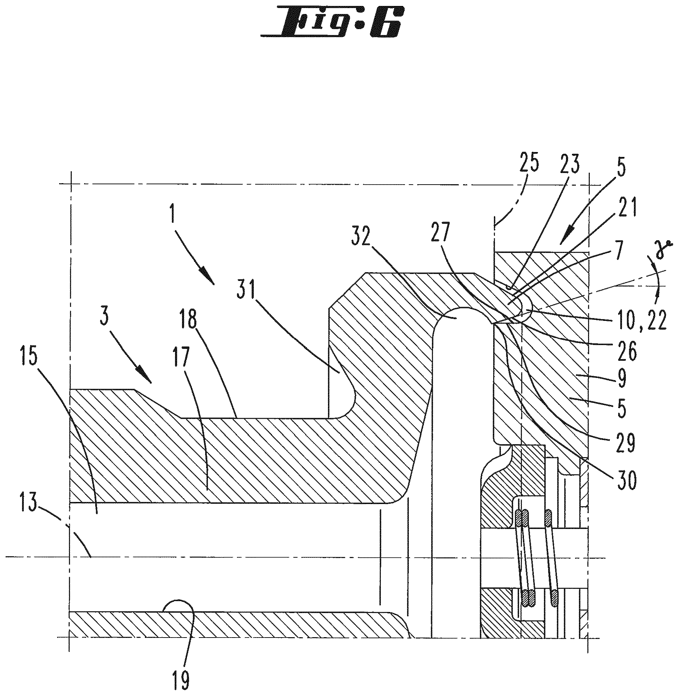

Mit Bezug auf die Figuren 5 und 6 werden ein zweites und ein drittes dazu ähnliches bevorzugtes Ausführungsbeispiel einer erfindungsgemäßen Anordnung 1 vorgestellt. Darin werden zur vereinfachten Übersicht Merkmale, die entsprechend oder vergleichbar zu Merkmalen des ersten Ausführungsbeispiels sind, mit den gleichen Bezugszeichen bezeichnet.

Abweichend von dem ersten Ausführungsbeispiel ist hier vorgesehen, dass sich der vorspringende Bereich 7 an seiner Innenseite in Richtung zu seinem freien Längsende konisch erweitert. Seine dortige innere Oberfläche 26 schließt in durch die Mittelachse 13 führenden Querschnittsebenen (wie bspw. in Figur 6) mit der Mittelachse 13 oder mit ihrer geometrischen Verlängerung einen Winkel γ ein, dessen Betrag in dem Beispiel zwischen 15° und 20° beträgt, der aber auch bspw. 30° betragen könnte. Die entlang der Umfangsrichtung verlaufende Ausnehmung 10 ist wiederum als Nut 22 ausgebildet. Sie grenzt an ihrer Innenseite an eine von der Nutmündung ausgehende Oberfläche 29 der Wandung 9, die in durch die Mittelachse 13 führenden Querschnittsebenen parallel zu der Mittelachse 13 verläuft. Die Nutmündung weist innenseitig einen Durchmesser d auf, der in einem Durchmesserintervall liegt, welches von dem kleinsten Durchmesser und dem größten Durchmesser der inneren Oberfläche 26 des vorspringenden Bereiches 7 vorgegeben ist. Daraus resultiert, dass bei einer zentralen Ausrichtung und axialen Annäherung die Oberfläche 26 auf die von der Innenseite der Nutmündung gebildete, kreisförmig umlaufende Kante der Wandung 9 trifft, wobei eine im Querschnitt praktisch nur punktförmige Kontaktierung erfolgt. In diesem, in Figur 5 gezeigten Zustand sollen der Hochdruckanschluss 3 und das Gehäuse 5 mittels eines Schweißverfahrens aneinander fixiert werden. Wie Figur 5 auch zeigt, ist dabei der vorspringende Bereich 7 zufolge des resultierenden Kontakts nur teilweise in die Ausnehmung 10 eingetreten. Die Formgebung der äußeren Oberflächen 21, 23 des vorspringenden Bereichs 7 und der entlang der Umfangsrichtung verlaufenden Ausnehmung 10 sind geometrisch so aufeinander abgestimmt, dass sich diese Oberflächen 21, 23 während der genannten Abstützung, also bevor der Schweißprozess begonnen hat, nicht berühren. In dem in Figur 5 gezeigten Beispiel ist vorgesehen, dass die Oberflächen 21, 23 in durch die Mittelachse 13 führenden Querschnittsebenen mit der Mittelachse verschiedene Winkel einschließen. Die in Figur 5 gezeigte Anordnung 1 eignet sich dadurch besonders für eine Verbindung der beiden Komponenten mittels eines Widerstands-Schweißverfahrens, bspw. mittels des Kondensatorentladungs-Schweißverfahrens. Eine solche Schweißanlage ist in den Figuren nicht mit dargestellt.

Um den Hochdruckanschluss 3 in der in Figur 5 gezeigten Anordnung an dem Gehäuse 5 mittels Kondensatorentladungsschweißen (sog. KE-Schweißen) zu fixieren, kann der Hochdruckanschluss parallel zu der Mittelachse 13, also axial, fest gegen die Wand 9 des Gehäuses 5 gedrückt werden, so dass sich die konische Oberfläche 26 fest gegen den Rand 30 bzw. gegen die vordere Kante der Nutmündung (siehe Nut 22) abstützt, d. h. ein hoher Kontaktdruck entsteht. Die Andruckkraft ist in Figur 5 symbolisch mit F bezeichnet. Der Hochdruckanschluss 3 und das Gehäuse 5 können in einem Fachmann an sich bekannter Weise mit einer Anlage zum Kondensatorentladungsschweißen verbunden werden. Diese Anlage ist in den Figuren nicht mit dargestellt. Der durch die Kondensatorentladung bewirkte Stromfluss durch die zunächst sehr begrenzte Kontaktzone führt dort zu einer Erhitzung und zum Aufschmelzen des Metalls, was schließlich zu der gewünschten stoffschlüssigen Verbindung führt. Bei Beginn des Schweißprozesses besteht, wie Figur 5 auch zeigt, zwischen den weiter radial außerhalb liegenden Oberflächen 21 und 23 kein Kontakt. Dadurch ist im ersten Schritt eine Freistellung vorgesehen, um beim Schweißen einen unerwünschten Strom-Nebenschluss zu vermeiden. Je nach Anforderungen besteht anschließend oder in einem weiteren Schritt die Möglichkeit, das Schweißverfahren fortzusetzen und dadurch den vorspringenden Bereich 7 an seiner Oberfläche 21 gegen die äußere Oberfläche 23 der Wandung 9 des Gehäuses 5 gezielt anzulegen, indem der Hochdruckanschluss beim Aufschmelzen in der Schweißzone um den Betrag des aufgeschmolzenen Materials nachrutschen sollte. Diesen gewünschten Betrag sollte man als Kontaktlücke vorhalten, damit die Anlage an dieser äußeren Kontaktzone und damit der Nebenschluss erst dann erfolgt, wenn der eigentliche Verbindungsprozess abgeschlossen ist. Damit wäre eine zusätzliche Stützwirkung an der Außenseite des Hochdruckanschlusses 3 an dem Gehäuse 5 zu erreichen.

Im Vergleich zu dem mit Bezug auf die Figuren 1 bis 4 beschriebenen ersten Ausführungsbeispiel wird deutlich, dass in dem Beispiel von Figur 5 die Schweißnaht bis zu einem in Figur 5 mit a bezeichneten radialen Abstand an die Mittelachse 13 heranreicht. In Figur 5 ist mit A der radiale Abstand des Ausganges einer angenommenen, von radial außen erzeugten Schweißnaht zu der Mittelachse 13 gezeichnet. Der Abstand a ist kleiner als der geringste radiale Abstand, bis zu dem sich eine von außen mittels Strahlschweißen (bspw. Elektronenstrahl- oder Laserstrahlschweißen) zwischen den Oberflächen 21, 23 erzeugte Schweißnaht erstrecken würde. Das bedeutet, dass nach dem ausgehend von Figur 5 bevorzugten Kondensatorentladungsschweißen im Betrieb der im Inneren herrschende Überdruck aufgrund der schon an dem Rand 30 beginnenden Schweißnaht nicht zwischen den Oberflächen des vorspringenden Bereiches 7 und der Ausnehmung 10 wirksam werden kann. Dadurch verringert sich im Vergleich zu einer angenommenen Situation, bei der von radial außen eine Schweißnaht erzeugt wird, in einer axialen, d. h. parallel zu der Mittelachse 13 geführten Projektionsbetrachtung die von dem Innendruck beaufschlagte projizierte axiale Fläche des Hochdruckanschlusses und des Gehäuses im Inneren der Anordnung. Dies wiederum führt zu einer vergleichsweise geringeren Druckbelastung und in der Folge auch zu niedrigeren, an der Schweißnaht wirksamen mechanischen Spannungen. Durch die insofern optimierte Geometrie ermöglicht die Erfindung, die Schweißnaht mittels des Kondensatorentladungsschweißens in einen von außen unzugänglichen Bereich zu legen und somit die Schweißnahtwurzel näher an die Mittelachse 13 der Konstruktion zu verlegen. Durch die dabei mögliche Minimierung der druckbeaufschlagten axialen projizierten Fläche resultiert eine vergleichsweise geringere Beanspruchung der Schweißnaht.

Das in Figur 6 gezeigte weitere Ausführungsbeispiel stimmt bis auf geringe gestalterische Abweichungen mit dem in Figur 5 gezeigten Ausführungsbeispiel überein.

Figur 7 zeigt als Außenansicht eine aus dem Stand der Technik bekannte Anordnung 1', die ein Gehäuse 5' und einen Hochdruckanschluss 3' zur Fixierung den dem Gehäuse 5' mittels eines Schweißprozesses umfasst. Im Inneren des Hochdruckanschlusses 3' erstreckt sich entlang einer zentralen Mittelachse 13' eine durchgehende Ausnehmung 15'. Die Wandung ist mit 17' und deren Außenseite mit 18' angegeben. Das Gehäuse 5' besitzt eine dem Hochdruckanschluss 3' zuweisende Gehäusefrontebene 25'. Bei dieser bekannten Anordnung markiert die Gehäusefrontebene 25' zugleich eine gerade Trennebene zwischen den beiden Komponenten. Wenn diese mittels eines Strahlschweißverfahrens miteinander verbunden werden sollen, besteht von außen die Möglichkeit, entlang der Trennfuge mittels einem senkrecht zu der Mittelachse 13' (siehe Richtung des Pfeiles 28') gerichteten Schweißkopf eine Schweißnaht zu erzeugen.

Alle offenbarten Merkmale sind (für sich, aber auch in Kombination untereinander) erfindungswesentlich. Die Unteransprüche charakterisieren mit ihren Merkmalen eigenständige erfinderische Weiterbildungen des Standes der Technik, insbesondere um auf Basis dieser Ansprüche Teilanmeldungen vorzunehmen.

## Patentansprüche

1. Anordnung (1) für ein Kraftstofffördersystem für ein Kraftfahrzeug, aufweisend ein Gehäuse (5) und einen Hochdruckanschluss (3) zur Fixierung an dem Gehäuse (5) mittels eines Schweißprozesses,
- wobei das Gehäuse (5) eine Wandung (9) umfasst, die eine Anschlussöffnung (2) aufweist,
- wobei der Hochdruckanschluss (3) eine Wandung (17) aufweist, die eine sich entlang einer Längsmittelachse (13) in dem Hochdruckanschluss (3) durch den Hochdruckanschluss (3) hindurchführende Ausnehmung (15) an ihrem Umfang berandet,
- wobei der Hochdruckanschluss (3) einen Gehäuseanschlussbereich (4), einen Zwischenbereich (6) und einen zwischen dem Gehäuseanschlussbereich (4) und dem Zwischenbereich (6) ausgebildeten Übergangsbereich (37) aufweist, wobei eine Haupterstreckungsrichtung des Übergangsbereichs (37) senkrecht zu der Längsmittelachse (13) angeordnet ist,
wobei in zu der Längsmittelachse (13) senkrechten Querschnittsebenen in dem Gehäuseanschlussbereich (4) die Außenkontur des Hochdruckanschlusses (3) größer als in dem Zwischenbereich (6) ist und in zu der Längsmittelachse (13) senkrechten Querschnittsebenen in dem Gehäuseanschlussbereich (4) die Innenkontur größer als in dem Zwischenbereich (6) ist,
- wobei in der Wandung (17) in dem Gehäuseanschlussbereich (4) angrenzend an den Übergangsbereich (37) innenseitig ein Radialeinstich (32) ausgebildet ist,
**dadurch gekennzeichnet, dass**
- die Wandung (9) des Gehäuses (5) an ihrer Außenseite eine Ausnehmung (10) begrenzt, die entlang einer Umfangsrichtung um die Anschlussöffnung (2) verläuft, und der Gehäuseanschlussbereich (4) einen vorspringenden Bereich (7) aufweist, der zur Kontaktierung des Gehäuses (5) bei teilweisem oder vollständigem Eintritt in die Ausnehmung (10) geeignet ist,
- und dass in der Wandung (17) in dem Übergangsbereich (37) angrenzend an den Zwischenbereich (6) außenseitig ein Axialeinstich (31) ausgebildet ist.

2. Anordnung (1) gemäß Anspruch 1, **dadurch gekennzeichnet, dass** der Axialeinstich (31) in durch die Mittelachse (13) führenden Querschnittsebenen am Umfang eine Kontur aufweist, die eine von der Außenseite (18) der Wandung (17) ausgehende Rundung (12) und eine an die Rundung (12) anschließende Gerade (14), die zu der Außenseite (18) der Wandung (17) des Übergangsbereichs führt, aufweist.

3. Anordnung gemäß (1) einem der vorangehenden Ansprüche, **dadurch gekennzeichnet, dass** der Radialeinstich (32) in durch die Mittelachse (13) führenden Querschnittsebenen am Umfang eine, insbesondere durchgehend, gerundete Kontur (16) aufweist.

4. Anordnung (1) gemäß einem der vorangehenden Ansprüche, **dadurch gekennzeichnet, dass** in einer axialen Projektionsbetrachtung der Radialeinstich (32) radial außerhalb des Axialeinstichs (31) liegt und/oder dass der Radialeinstich (32) an den vorspringenden Bereich (7) angrenzt und/oder dass in einer zu der Mittelachse (13) parallelen Richtung der Axialeinstich (31) weiter als der Radialeinstich (32) von der dem Hochdruckanschluss (3) zugewandten Oberfläche der Wandung (9) des Gehäuses (5) beabstandet ist, wobei insbesondere vorgesehen ist, dass der Radialeinstich (32), wenn der vorspringende Bereich (7) in die entlang der Umfangsrichtung verlaufende Ausnehmung (10) eingesetzt ist, an die Oberfläche der Wandung (9) angrenzt.

5. Anordnung (1) gemäß einem der vorangehenden Ansprüche, **dadurch gekennzeichnet, dass** sich der vorspringende Bereich (7) an der Außenseite (18) in Richtung zu einem freien Längsende (20) des vorspringenden Bereichs (7), insbesondere konisch, verjüngt, wobei insbesondere vorgesehen ist, dass die dortige äußere Oberfläche (21) des vorspringenden Bereichs (7) in durch die Mittelachse (13) führenden Querschnittsebenen mit einer gedachten Verlängerung der Mittelachse (13) einen Winkel (α) einschließt, dessen Betrag im Bereich von 10 bis 80 Grad, insbesondere im Bereich von 30 bis 60 Grad, insbesondere im Bereich von 40 bis 50 Grad, liegt und insbesondere 45 Grad beträgt.

6. Anordnung (1) gemäß einem der vorangehenden Ansprüche, **dadurch gekennzeichnet, dass** die entlang der Umfangsrichtung verlaufende Ausnehmung (10) in der Wandung (9) als Nut (22) ausgebildet ist und dass sich der von der Nut (22) gebildete Ringraum an seiner Außenseite in Richtung zu dem Nutgrund, insbesondere konisch, verjüngt.

7. Anordnung (1) gemäß einem der vorangehenden Ansprüche, **dadurch gekennzeichnet, dass** die die Außenseite der Nut (22) berandende Oberfläche (23) der Wandung (9) des Gehäuses (5) in durch die Mittelachse (13) führenden Querschnittsebenen mit einer Verlängerung der Mittelachse (13) einen Winkel (β) einschließt, dessen Vorzeichen und Betrag dem Winkel (α) entspricht, den die äußere Oberfläche (21) des vorspringenden Bereiches (7) mit einer Verlängerung der Mittelachse (13) einschließt und dass sich diese beiden Oberflächen (21, 23) in dem gleichen Durchmesserintervall erstrecken.

8. Anordnung (1) gemäß einem der vorangehenden Ansprüche, **dadurch gekennzeichnet, dass** eine von dem Gehäuse (5) wegführende geometrische Verlängerung der konischen Kontaktzone (24) zwischen der Außenseite des vorspringenden Bereichs (7) und der Außenseite der entlang der Umfangsrichtung verlaufenden Ausnehmung (10) das Gehäuse (5) geometrisch nicht schneidet.

9. Anordnung (1) gemäß einem der vorangehenden Ansprüche, **dadurch gekennzeichnet, dass** der vorspringende Bereich (7) an seiner Innenseite einen zylindrische Oberfläche (26) aufweist, dass die entlang der Umfangsrichtung verlaufende Ausnehmung (10) in der Wandung (9) als Nut (22) ausgebildet ist und an ihrer Innenseite an eine zylindrische Oberfläche der Wandung (9) grenzt, und dass diese beiden zylindrischen Oberflächen (26, 27) den gleichen oder einen etwa gleichen Durchmesser besitzen.

10. Anordnung (1) gemäß einem der vorangehenden Ansprüche, **dadurch gekennzeichnet, dass** Konturen des vorspringenden Bereiches (7) und der entlang der Umfangsrichtung verlaufenden Ausnehmung (10) in der Wandung (9) des Gehäuses (5) in Bezug auf durch die Mittelachse (13) führende Querschnittsebenen so aufeinander abgestimmt sind, dass der vorspringende Bereich (7) vollständig oder teilweise in die entlang der Umfangsrichtung verlaufende Ausnehmung (10) einsetzbar oder eingesetzt ist, so dass er mit seiner äußeren Oberfläche (21) flächig an der äußeren Oberfläche (23) der Wandung (9) in der Ausnehmung (10) und mit seiner inneren Oberfläche (26) flächig an der inneren Oberfläche (27) der Wandung (9) in der Ausnehmung (10) anliegt.

11. Anordnung (1) gemäß einem der vorangehenden Ansprüche, **dadurch gekennzeichnet, dass**, wenn der vorspringende Bereich (7) weitest möglich in die entlang der Umfangsrichtung verlaufende Ausnehmung (10) eingesetzt ist, innerhalb der Ausnehmung (10) ein an das freie Längsende (20) des vorspringenden Bereichs (7) angrenzender Hohlraum verbleibt.

12. Anordnung (1) gemäß einem der vorangehenden Ansprüche, **dadurch gekennzeichnet, dass** sich der vorspringende Bereich (7) an seiner Innenseite in Richtung zu einem freien Längsende (20) des vorspringenden Bereichs (7), insbesondere konisch, erweitert, wobei seine dortige innere Oberfläche (26) in durch die Mittelachse (13) führenden Querschnittsebenen mit der Mittelachse (13) einen Winkel (γ) einschließt, dessen Betrag im Bereich von 10 bis 40 Grad liegt und insbesondere 30 Grad beträgt.

13. Anordnung (1) gemäß einem der vorangehenden Ansprüche, **dadurch gekennzeichnet, dass** die entlang der Umfangsrichtung verlaufende Ausnehmung (10) in der Wandung (9) als Nut (22) ausgebildet ist und an ihrer Innenseite an eine von der Nutmündung ausgehende Oberfläche (29) der Wandung (9) grenzt, die in durch die Mittelachse (13) führenden Querschnittsebenen parallel zu der Mittelachse (13) verläuft oder die den von der Nut (22) gebildeten Ringraum in Richtung zu dem Nutgrund, insbesondere konisch, verjüngt, indem sie mit der Mittelachse (13) einen Winkel einschließt, dessen Betrag kleiner als der Betrag des Winkels ist, den die innere Oberfläche an der konischen Erweiterung des vorspringenden Bereichs (7) mit der Mittelachse (13) einschließt.

14. Anordnung (1) gemäß einem der vorangehenden Ansprüche, **dadurch gekennzeichnet, dass** die Nutmündung innenseitig einen Durchmesser (d) aufweist, der in einem Durchmesserintervall liegt, in dem sich die innere Oberfläche (26) des vorspringenden Bereiches (7) erstreckt.

15. Anordnung (1) gemäß einem der vorangehenden Ansprüche, **dadurch gekennzeichnet, dass** der vorspringende Bereich (7) teilweise in die entlang der Umfangsrichtung verlaufende Ausnehmung (10) der Wandung (9) eingesteckt ist, wobei seine innere Oberfläche (26) gegen den radial inneren Rand (30) der Nutmündung abgestützt ist, und dass die Formgebung der äußeren Oberflächen (21, 23) des vorspringenden Bereiches (7) und der entlang der Umfangsrichtung verlaufenden Ausnehmung (10) in der Wandung (9) so aufeinander abgestimmt sind, dass sich diese Oberflächen (21, 23) während der genannten Abstützung nicht berühren, wobei insbesondere vorgesehen ist, dass diese Oberflächen (21, 23) in durch die Mittelachse führenden Querschnittsebenen mit der Mittelachse (13) verschiedene Winkel einschließen.

## Claims

1. Arrangement (1) for a fuel delivery system for a motor vehicle, having a housing (5) and having a high-pressure connector (3) for fixing to the housing (5) by way of a welding process,
- wherein the housing (5) comprises a wall (9) which has a connector opening (2),
- wherein the high-pressure connector (3) has a wall (17) circumferentially bordering a recess (15) which leads through the high-pressure connector (3), along a longitudinal central axis (13) in the high-pressure connector (3),
- wherein the high-pressure connector (3) has a housing connector region (4), an intermediate region (6) and a transition region (37) formed between the housing connector region (4) and the intermediate region (6), wherein a main direction of extent of the transition region (37) is arranged perpendicular to the longitudinal central axis (13), wherein, in cross-sectional planes perpendicular to the longitudinal central axis (13), the outer contour of the high-pressure connector (3) is larger in the housing connector region (4) than in the intermediate region (6) and, in cross-sectional planes perpendicular to the longitudinal central axis (13), the inner contour is larger in the housing connector region (4) than in the intermediate region (6),
- wherein a radial indentation (32) is formed at the inner side in the wall (17) in the housing connector region (4), adjacent to the transition region (37),
**characterized in that**
- the wall (9) of the housing (5) delimits, at its outer side, a recess (10) which runs along a circumferential direction around the connector opening (2), and the housing connector region (4) has a protruding region (7) which is suitable for making contact with the housing (5) when said protruding region partially or fully enters the recess (10),
- and **in that** an axial indentation (31) is formed at the outer side in the wall (17) in the transition region (37), adjacent to the intermediate region (6).

2. Arrangement (1) according to Claim 1, **characterized in that**, in cross-sectional planes leading through the central axis (13), the axial indentation (31) circumferentially has a contour with a rounded portion (12) proceeding from the outer side (18) of the wall (17) and with a straight portion (14) which adjoins the rounded portion (12) and which leads to the outer side (18) of the wall (17) of the transition region.

3. Arrangement (1) according to one of the preceding claims, **characterized in that**, in cross-sectional planes leading through the central axis (13), the radial indentation (32) circumferentially has an in particular continuously rounded contour (16).

4. Arrangement (1) according to one of the preceding claims, **characterized in that**, viewed in an axial projection, the radial indentation (32) is situated radially outside the axial indentation (31), and/or **in that** the radial indentation (32) adjoins the protruding region (7) and/or in that, in a direction parallel to the central axis (13), the axial indentation (31) is spaced apart further than the radial indentation (32) from that surface of the wall (9) of the housing (5) which faces toward the high-pressure connector (3), wherein it is provided in particular that the radial indentation (32) adjoins the surface of the wall (9) when the protruding region (7) has been inserted into the recess (10) running along the circumferential direction.

5. Arrangement (1) according to one of the preceding claims, **characterized in that** the protruding region (7), at the outer side (18), narrows in particular conically in the direction of a free longitudinal end (20) of the protruding region (7), wherein it is provided in particular that, there, in cross-sectional planes leading through the central axis (13), the outer surface (21) of the protruding region (7) encloses an angle (α) with an imaginary elongation of the central axis (13), the magnitude of which angle lies in the range from 10 to 80 degrees, in particular in the range from 30 to 60 degrees, in particular in the range from 40 to 50 degrees, and is in particular 45 degrees.

6. Arrangement (1) according to one of the preceding claims, **characterized in that** the recess (10), which runs along the circumferential direction, in the wall (9) is in the form of a groove (22), and **in that** the ring-shaped chamber formed by the groove (22) narrows, in particular conically, at its outer side in the direction of the groove base.

7. Arrangement (1) according to one of the preceding claims, **characterized in that**, in cross-sectional planes leading through the central axis (13), that surface (23) of the wall (9) of the housing (5) which borders the outer side of the groove (22) encloses an angle (β) with an elongation of the central axis (13), the sign and magnitude of which angle (β) correspond to those of the angle (α) enclosed by the outer surface (21) of the protruding region (7) with an elongation of the central axis (13), and **in that** said two surfaces (21, 23) extend in the same diameter interval.

8. Arrangement (1) according to one of the preceding claims, **characterized in that** a geometric elongation, leading away from the housing (5), of the conical contact zone (24) between the outer side of the protruding region (7) and the outer side of the recess (10) running along the circumferential direction geometrically does not intersect the housing (5).

9. Arrangement (1) according to one of the preceding claims, **characterized in that** the protruding region (7) has, on its inner side, a cylindrical surface (26), **in that** the recess (10), which runs along the circumferential direction, in the wall (9) is in the form of a groove (22) and, at its inner side, adjoins a cylindrical surface of the wall (9), and **in that** said two cylindrical surfaces (26, 27) have an equal or approximately equal diameter.

10. Arrangement (1) according to one of the preceding claims, **characterized in that**, in cross-sectional planes leading through the central axis (13), contours of the protruding region (7) and of the recess (10), which runs along the circumferential direction, in the wall (9) of the housing (5) are coordinated with one another such that the protruding region (7) is insertable or inserted entirely or partially into the recess (10), which runs along the circumferential direction, in such a way that said protruding region bears areally by way of its outer surface (21) against the outer surface (23) of the wall (9) in the recess (10) and bears areally by way of its inner surface (26) against the inner surface (27) of the wall (9) in the recess (10).

11. Arrangement (1) according to one of the preceding claims, **characterized in that**, when the protruding region (7) has been inserted as far as possible into the recess (10) which runs along the circumferential direction, there remains within the recess (10) a cavity which adjoins the free longitudinal end (20) of the protruding region (7) .

12. Arrangement (1) according to one of the preceding claims, **characterized in that** the protruding region (7) widens, in particular conically, at its inner side in the direction of a free longitudinal end (20) of the protruding region (7), wherein, there, in cross-sectional planes leading through the central axis (13), the inner surface (26) of said protruding region encloses an angle (γ) with the central axis (13), the magnitude of which angle lies in the range from 10 to 40 degrees and is in particular 30 degrees.

13. Arrangement (1) according to one of the preceding claims, **characterized in that** the recess (10), which runs along the circumferential direction, in the wall (9) is in the form of a groove (22) and, at its inner side, adjoins a surface (29), which proceeds from the groove mouth, of the wall (9), which surface, in cross-sectional planes leading through the central axis (13), runs parallel to the central axis (13) or causes the ring-shaped chamber formed by the groove (22) to narrow, in particular conically, in the direction of the groove base by virtue of the fact that said surface encloses an angle with the central axis (13), the magnitude of which angle is less than the magnitude of the angle enclosed by the inner surface at the conical widening of the protruding region (7) with the central axis (13).

14. Arrangement (1) according to one of the preceding claims, **characterized in that** the groove mouth has, at the inner side, a diameter (d) which lies in a diameter interval in which the inner surface (26) of the protruding region (7) extends.

15. Arrangement (1) according to one of the preceding claims, **characterized in that** the protruding region (7) is inserted partially into the recess (10), which runs along the circumferential direction, of the wall (9), wherein the inner surface (26) of said protruding region is supported against the radially inner rim (30) of the groove mouth, and **in that** the shaping of the outer surfaces (21, 23) of the protruding region (7) and of the recess (10), which runs along the circumferential direction, in the wall (9) are coordinated with one another such that, in the presence of said support, said surfaces (21, 23) do not come into contact, wherein it is provided in particular that, in cross-sectional planes leading through the central axis, said surfaces (21, 23) enclose different angles with the central axis (13).

## Revendications

1. Agencement (1) pour un système d'alimentation en carburant pour un véhicule automobile, présentant un boîtier (5) et un raccord haute pression (3) pour la fixation au boîtier (5) au moyen d'un processus de soudage,
- le boîtier (5) comprenant une paroi (9) qui présente une ouverture de raccordement (2),
- le raccord haute pression (3) présentant une paroi (17) qui borde au niveau de sa périphérie un évidement (15) s'étendant à travers le raccord haute pression (3) le long d'un axe médian longitudinal (13) dans le raccord haute pression (3),
- le raccord haute pression (3) présentant une région de raccordement au boîtier (4), une région intermédiaire (6) et une région de transition (37) réalisée entre la région de raccordement au boîtier (4) et la région intermédiaire (6), une direction d'étendue principale de la région de transition (37) étant perpendiculaire à l'axe médian longitudinal (13),
le contour extérieur du raccord haute pression (3), dans des plans en section transversale perpendiculaires à l'axe médian longitudinal (13) étant plus grand dans la région de raccordement au boîtier (4) que dans la région intermédiaire (6) et dans des plans en section transversale perpendiculaires à l'axe médian longitudinal (13), le contour intérieur étant plus grand dans la région de raccordement au boîtier (4) que dans la région intermédiaire (6),
- une entaille radiale (32) étant réalisée du côté intérieur dans la paroi (17) dans la région de raccordement au boîtier (4) en position adjacente à la région de transition (37),
**caractérisé en ce que**
- la paroi (9) du boîtier (5) délimite au niveau de son côté extérieur un évidement (10) qui s'étend le long d'une direction périphérique autour de l'ouverture de raccordement (2), et la région de raccordement au boîtier (4) présente une région saillante (7) qui est apte à venir en contact avec le boîtier (5) lors d'une entrée partielle ou complète dans l'évidement (10),
- et **en ce qu'**une entaille axiale (31) est réalisée du côté extérieur dans la paroi (17) dans la région de transition (37) en position adjacente à la région intermédiaire (6).

2. Agencement (1) selon la revendication 1, **caractérisé en ce que** l'entaille axiale (31), dans des plans en section transversale passant à travers l'axe médian (13), présente au niveau de sa périphérie un contour qui présente un arrondi (12) partant du côté extérieur (18) de la paroi (17) et une droite (14) se raccordant à l'arrondi (12), qui conduit au côté extérieur (18) de la paroi (17) de la région de transition.

3. Agencement selon (1) l'une quelconque des revendications précédentes, **caractérisé en ce que** l'entaille radiale (32) présente un contour arrondi (16), notamment continu, au niveau de sa périphérie dans des plans en section transversale passant à travers l'axe médian (13).

4. Agencement (1) selon l'une quelconque des revendications précédentes, **caractérisé en ce que**, vu en projection axiale, l'entaille radiale (32) est située radialement à l'extérieur de l'entaille axiale (31) et/ou **en ce que** l'entaille radiale (32) est adjacente à la région saillante (7) et/ou **en ce que** dans une direction parallèle à l'axe médian (13), l'entaille axiale (31) est plus éloignée que l'entaille radiale (32) de la surface de la paroi (9) du boîtier (5) tournée vers le raccord haute pression (3), et il est notamment prévu que l'entaille radiale (32) soit adjacente à la surface de la paroi (9) lorsque la région saillante (7) est insérée dans l'évidement (10) s'étendant le long de la direction périphérique.

5. Agencement (1) selon l'une quelconque des revendications précédentes, **caractérisé en ce que** la région saillante (7) se rétrécit, notamment sous forme conique, au niveau du côté extérieur (18) dans la direction d'une extrémité longitudinale libre (20) de la région saillante (7), et il est prévu notamment que la surface (21), extérieure à cet endroit, de la région saillante (7) forme dans des plans en section transversale passant à travers l'axe médian (13), un angle (α) avec un prolongement imaginaire de l'axe médian (13), dont la valeur est comprise dans une plage de 10 à 80°, en particulier dans une plage de 30 à 60°, en particulier dans une plage de 40 à 50°, et vaut notamment 45°.

6. Agencement (1) selon l'une quelconque des revendications précédentes, **caractérisé en ce que** l'évidement (10) dans la paroi (9) s'étendant le long de la direction périphérique est réalisé sous forme de rainure (22) et **en ce que** l'espace annulaire formé par la rainure (22) se rétrécit, en particulier sous forme conique, au niveau de son côté extérieur dans la direction du fond de rainure.

7. Agencement (1) selon l'une quelconque des revendications précédentes, **caractérisé en ce que** la surface (23) de la paroi (9) du boîtier (5) bordant le côté extérieur de la rainure (22) dans des plans en section transversale passant à travers l'axe médian (13) forme avec un prolongement de l'axe médian (13) un angle (β) dont le signe et la valeur correspondent à l'angle (α) qui est formé par la surface extérieure (21) de la région saillante (7) avec un prolongement de l'axe médian (13) et **en ce que** ces deux surfaces (21, 23) s'étendent dans le même intervalle de diamètre.

8. Agencement (1) selon l'une quelconque des revendications précédentes, **caractérisé en ce qu'**un prolongement géométrique, s'éloignant du boîtier (5), de la zone de contact conique (24) entre le côté extérieur de la région saillante (7) et le côté extérieur de l'évidement (10) s'étendant le long de la direction périphérique n'intersecte pas géométriquement le boîtier (5).

9. Agencement (1) selon l'une quelconque des revendications précédentes, **caractérisé en ce que** la région saillante (7) présente au niveau de son côté intérieur une surface cylindrique (26), **en ce que** l'évidement (10) s'étendant le long de la direction périphérique est réalisé dans la paroi (9) sous forme de rainure (22) et est adjacent au niveau de son côté intérieur à une surface cylindrique de la paroi (9), et **en ce que** ces deux surfaces cylindriques (26, 27) possèdent le même ou approximativement le même diamètre.

10. Agencement (1) selon l'une quelconque des revendications précédentes, **caractérisé en ce que** des contours de la région saillante (7) et de l'évidement (10) s'étendant le long de la direction périphérique dans la paroi (9) du boîtier (5) sont adaptés les uns aux autres par rapport à des plans en section transversale passant par l'axe médian (13) de telle sorte que la région saillante (7) puisse être insérée ou soit insérée complètement ou en partie dans l'évidement (10) s'étendant le long de la direction périphérique de telle sorte qu'elle s'applique avec sa surface extérieure (21) à plat contre la surface extérieure (23) de la paroi (9) dans l'évidement (10) et avec sa surface intérieure (26) à plat contre la surface intérieure (27) de la paroi (9) dans l'évidement (10).

11. Agencement (1) selon l'une quelconque des revendications précédentes, **caractérisé en ce que** si la région saillante (7) est insérée aussi loin que possible dans l'évidement (10) s'étendant le long de la direction périphérique, il reste une cavité adjacente à l'extrémité longitudinale libre (20) de la région saillante (7) à l'intérieur de l'évidement (10).

12. Agencement (1) selon l'une quelconque des revendications précédentes, **caractérisé en ce que** la région saillante (7) s'élargit au niveau de son côté intérieur dans la direction d'une extrémité longitudinale libre (20) de la région saillante (7), en particulier sous forme conique, sa surface intérieure à cet endroit (26) formant avec l'axe médian (13), dans des plans en section transversale passant à travers l'axe médian (13), un angle (γ) dont la valeur est comprise dans la plage de 10 à 40° et vaut notamment 30°.

13. Agencement (1) selon l'une quelconque des revendications précédentes, **caractérisé en ce que** l'évidement (10) dans la paroi (9) s'étendant le long de la direction périphérique est réalisé sous forme de rainure (22) et est adjacent au niveau de son côté intérieur à une surface (29) de la paroi (9) partant de l'embouchure de la rainure, qui s'étend dans des plans en section transversale passant à travers l'axe médian (13) parallèlement à l'axe médian (13) ou qui rétrécit l'espace annulaire formé par la rainure (22) dans la direction du fond de rainure, en particulier sous forme conique, par le fait qu'elle forme avec l'axe médian (13) un angle dont la valeur est inférieure à la valeur de l'angle formé par la surface intérieure au niveau de l'élargissement conique de la région saillante (7) et l'axe médian (13).

14. Agencement (1) selon l'une quelconque des revendications précédentes, **caractérisé en ce que** l'embouchure de la rainure présente du côté intérieur un diamètre (d) qui est situé dans un intervalle de diamètre dans lequel s'étend la surface intérieure (26) de la région saillante (7).

15. Agencement (1) selon l'une quelconque des revendications précédentes, **caractérisé en ce que** la région saillante (7) est enfichée en partie dans l'évidement (10) de la paroi (9) s'étendant le long de la direction périphérique, sa surface intérieure (26) étant supportée contre le bord radialement intérieur (30) de l'embouchure de la rainure, et **en ce que** les formes des surfaces extérieures (21, 23) de la région saillante (7) et de l'évidement (10) dans la paroi (9) s'étendant dans le long de la direction périphérique sont ajustées l'une à l'autre de telle sorte que ces surfaces (21, 23) ne soient pas en contact l'une avec l'autre pendant ledit support, notamment il est prévu que ces surfaces (21, 23) forment avec l'axe médian (13) des angles différents, dans des plans en section transversale passant à travers l'axe médian.
